# EUROPÄISCHE PATENTANMELDUNG

(11) **EP 3 789 323 A1**
(43) Veröffentlichungstag der Anmeldung: **10.03.2021**
(21) Anmeldenummer: 20189782.4
(22) Anmeldetag: 06.08.2020
(51) Int. Cl.: B65G 47/90, B25J 9/00

(54) **BEHÄLTERGREIFER UND BEHÄLTERTRANSPORTVORRICHTUNG**

(30) Priorität: 05.09.2019 DE 102019123774
(71) Anmelder: KRONES AG, 93073 Neutraubling (DE)
(72) Erfinder: Mehringer, Katarina, 93073 Neutraubling (DE); Weinzierl, Maximilian, 93073 Neutraubling (DE); Schroepf, Benedikt, 93073 Neutraubling (DE)
(74) Vertreter: Grünecker Patent- und Rechtsanwälte PartG mbB

(57) **Zusammenfassung**

Die Erfindung betrifft einen Behältergreifer zum Greifen und hängenden Transport von Behältern, umfassend mindestens eine Klammer (2'), die zum Greifen und Halten des Behälters ausgebildet ist. Dabei ist die Klammer (2') einstückig ausgebildet und umfasst Greifbacken (10), die derart ausgebildet sind, dass sie durch externe Krafteinwirkung derart verformbar sind, dass sie eine Greifwirkung entfalten.

## Beschreibung

Die Erfindung betrifft einen Behältergreifer zum Greifen und hängenden Transport von Behältern, umfassend mindestens eine Klammer, die zum, insbesondere seitlichen, Greifen und Halten des Behälters ausgebildet ist.

Vorzugsweise werden die erfindungsgemäßen Behältergreifer in Getränkeabfüllanlagen, besonders bevorzugt in Rundläufermaschinen, eingesetzt.

Solche Transportvorrichtungen sind besonders verbreitet beim sogenannten Neck-Handling von Flaschen, bei denen die Flaschen am Flaschenhals gegriffen werden.

Die bisher bekannten Klammern bestehen aus zwei Greifbacken, die eine Greiffläche aufweisen, die genau auf die Form des jeweils zu verarbeitenden Behälters abgestimmt sind, so dass beim Greifen ein Formschluss zwischen Greiffläche und Behälter hergestellt werden kann.

Die Greifbacken werden aktiv, also durch Antriebselemente und eine entsprechende Steuerung, oder passiv durch im Transportweg der Klammern angeordnete, beispielsweise mechanische, Auslöser bzw. Aktivierungselemente betätigt, um die Behälter zu greifen.

Das Problem bei den bekannten Klammern besteht darin, dass kaum Flexibilität hinsichtlich der Form des Behälters in dem Bereich, in dem die Klammern angreifen, besteht. Bekannte Klammern ermöglichen meist nur eine Varianz des Behälterdurchmessers von etwa 0,15 mm.

Daher ist es erforderlich, zum Transport verschiedener Behälterformate die Klammern auszutauschen. Ein solcher Austausch ist aufwändig und zeitintensiv, zumal typischerweise in einer Anlage sehr viele Klammern verwendet werden. Somit ist die Transportvorrichtung insgesamt unflexibel was die Verarbeitung verschiedener Behälterformate betrifft.

Es ist also eine Aufgabe der Erfindung, einen Behältergreifer bereitzustellen, der hinsichtlich der verarbeiteten Behälterformate eine verbesserte Flexibilität aufweist.

Die Aufgabe wird durch den Gegenstand des Anspruchs 1 gelöst. Demnach ist die Klammer einstückig ausgebildet und umfasst Greifbacken, die derart ausgebildet sind, dass sie durch Anlegen einer externen Kraft derart verformbar sind, dass sie eine Greifwirkung entfalten.

Mit anderen Worten nehmen die Greifbacken aufgrund der Verformung eine Greif- und Haltestellung ein bzw. werden in eine Greif- und Halteform gebracht. Das Entfalten der Greifwirkung kann umfassen, dass sich zumindest die zueinander hin weisenden Schenkel der Greifbacken, auch als innere Schenkel bezeichnet, derart krümmen, dass zwischen den Greifbacken ein Greifbereich ausgebildet wird. Insbesondere können sich die Greifbacken, insbesondere deren innere Schenkel, so krümmen, dass sie, wenn zwischen ihnen ein Behälter angeordnet ist, den Behälter zumindest teilweise umschließen. Zudem kann das entfalten der Greifwirkung umfassen, dass die Klammer, insbesondere mittels der Greifbacken, eine Verschlusskraft zum Greifen des Behälters ausübt.

Die Kraft, die zu der besagten Verformung führt, wird im Folgenden auch vereinfacht als Verformungskraft bezeichnet.

Die Greifbacken können aufgrund der Verformung Behälter verschiedener Durchmesser zuverlässig umschließen und greifen und können somit für die Verarbeitung verschiedener Behälterformate verwendet werden. Das heißt, dass ein Wechsel zwischen verschiedenen Behälterformaten vereinfacht wird. Es wird also eine erhöhte Flexibilität hinsichtlich der verarbeiteten Behälterformate erreicht. Mit anderen Worten wird ein adaptives bzw. flexibles Greifelement bereitgestellt.

Im Folgenden ist, wenn die Form der Klammer beschrieben wird, soweit nicht anders spezifiziert, stets die Form gemeint, in der die Klammer im Ruhezustand ist bzw. die Verformungskraft nicht angelegt ist.

Die beiden Greifbacken können zueinander im Wesentlichen spiegelsymmetrisch ausgebildet und angeordnet sein. Insbesondere kann die gesamte Klammer im Wesentlichen spiegelsymmetrisch ausgebildet sein.

Bei den Behältern kann es sich beispielsweise um Flaschen oder Dosen handeln. Wenn es sich um Flaschen handelt, kann die Klammer insbesondere zum Neck-Handling, also zum Greifen und Halten der Flasche zumindest am Flaschenhals, ausgebildet sein.

Die Klammer kann beispielsweise durch Spritzguss oder durch 3D-Druckverfahren, beispielsweise FLM oder FDM, hergestellt sein. Die Klammer kann beispielsweise aus einem Material, welches Nylon umfasst, bestehen.

Unter seitlichem Greifen ist zu verstehen, dass die Greifbacken der Klammer im ordnungsgemäßen Betrieb beim Greifen eines Behälters nicht von oben oder von unten an den Behälter angreifen. Insbesondere können die Klammern derart ausgebildet und angeordnet sein, dass im ordnungsgemäßen Betrieb das Greifen in einer horizontalen Ebene erfolgt. Die Klammer kann insbesondere zum umfänglichen Greifen eines Behälters ausgebildet sein. Das heißt, dass die Greifbacken derart ausgebildet und angeordnet sind, dass sie im ordnungsgemäßen Betrieb am Umfang des Behälters angreifen.

Die externe Kraft, die auf die Klammer wirkt, kann innerhalb der Klammer, insbesondere aufgrund der Form und der Materialelastizität der Klammer und insbesondere der Greifbacken, derart verteilt werden, dass die Greifbacken zum Greifen eines Behälters verformt werden. Mit anderen Worten kann die Kraft derart verteilt werden, dass die Klammer die Greifwirkung entfaltet.

Ein Beispiel für eine solche Verteilung einer externen Kraft ist der sogenannte Fischflosseneffekt (auch Fin Ray Effekt). Die Klammern können also als Fin Ray Klammern ausgebildet sein.

Jede der Greifbacken kann eine Rippenstruktur aufweisen, die zum Verteilen der externen Kraft innerhalb der Greifbacken ausgebildet ist derart, dass sie zum Greifen eines Behälters verformt werden.

Jede der Greifbacken kann einen inneren Schenkel, der der jeweils anderen Greifbacke zugewandt ist, und einen äußeren Schenkel aufweisen, wobei die beiden Schenkel an einer Stelle direkt miteinander verbunden sind und zusätzlich über zwischen den beiden Schenkeln angeordnete Streben miteinander verbunden sind.

Die Streben bilden mit anderen Worten eine zwischen den Schenkeln angeordnete Verstrebung, die die beiden Schenkel verbindet. Die Streben können die Rippen der oben erwähnten Rippenstruktur darstellen.

Die Schenkel und die Streben können in einer Ebene angeordnet sein.

De Streben können jeweils in einem Winkel von 10 bis 25 Grad, insbesondere 13 bis 22 Grad, insbesondere 14 bis 29 Grad bezüglich des jeweiligen inneren Schenkels angeordnet sein. Die Streben können in einem Winkel von 90 bis 140 Grad, insbesondere 100 bis 130 Grad, insbesondere 110 bis 120 Grad, bezüglich des jeweiligen äußeren Schenkels angeordnet sein. Der Winkel wird dabei an der Seite der Streben betrachtet, die der Stelle, an der der innere und der äußere Schenkel direkt miteinander verbunden sind, zugewandt ist.

Die beiden Schenkel können insbesondere V-förmig miteinander verbunden sein. In diesem Fall ist ein Ende des inneren Schenkels mit einem Ende des äußeren Schenkels direkt verbunden.

Die beiden Schenkel können einen spitzen Winkel einschließen. Beispielsweise können die Schenkel einen Winkel zwischen 40 und 85 Grad, insbesondere zwischen 45 und 70 Grad.

Eine oder beide Greifbacken, insbesondere der jeweilige innere Schenkel, können eine Greiffläche aufweisen. Die Greiffläche umfasst eine Fläche der Greifbacken, die im bestimmungsgemäßen Gebrauch zumindest teilweise an den Behältern angreift.

Die Greiffläche kann eine Krümmung aufweisen, die insbesondere zum Greifen von verschiedenen Behälterdurchmessern geeignet ist. Insbesondere kann der Krümmungsradius zwischen 20 und 45 mm, insbesondere 25 und 40 mm, insbesondere 30 und 35 mm liegen. Insbesondere kann die Greiffläche gekrümmt sein und der übrige Teil des inneren Schenkels keine Krümmung aufweisen.

Die Greifflächen können insbesondere mit dem Radius gekrümmt sein, der dem maximal zu greifenden Behälterradius entspricht. Insbesondere kann. Wenn Behälter mit diesem Radius gegriffen werden, kann dann beispielsweise die gesamte Greiffläche am Behälter anliegen. Insbesondere bei anderen Behälterradien kann auch weniger als die gesamte Greiffläche am Behälter anliegen. Aufgrund der Verformung gibt es jedoch eine Vielzahl von Behälterradien, bei denen noch mindestens vier Greifpunkte, beispielsweise an den äußeren Enden der Greifflächen, vorliegen.

Die Schenkel und Streben können jeweils beispielsweise eine Breite von etwa 1 mm bis 3 mm, insbesondere 1,5 mm bis 2,5 mm, insbesondere 2 mm. Die Schenkel und Streben können eine Höhe zwischen 4 und 8, insbesondere zwischen 5 und 7, insbesondere 6,5 mm haben. Die Anzahl der Streben pro Greifbacke kann beispielsweise zwischen 2 und 10, insbesondere zwischen 3 und 8, insbesondere zwischen 4 und 6 liegen.

Die Greifflächen können derart ausgebildet sein, dass sie eine Höhe zwischen 3 mm und 8 mm, insbesondere zwischen 4 mm und 7 mm, beispielsweise etwa 4,3 mm aufweisen. Insbesondere kann dabei die Höhe der Greiffläche kleiner oder gleich der Höhe der übrigen Bereiche des inneren Schenkels sein. Zwar wäre die Erwartung, dass die Greifwirkung durch vergrößern der Greiffläche erhöht werden kann, aber überraschenderweise wird, insbesondere abhängig vom Behälterformat, die Greifwirkung oberhalb eines bestimmten Werts der Höhe der Greiffläche nicht besser oder sogar schlechter. Behälterformate unterscheiden sich unter anderem oft in der Größe der zylinderförmigen Bereiche ihrer Außenform. In nicht-zylindrischen Bereichen hat eine zylinderförmige Greiffläche unter Umständen wenig Auflagefläche und wenig Halt. Mit einer geringeren Höhe der Greiffläche kann auch für Behälterformate mit einer Außenform mit kleineren zylinderförmigen Bereichen eine gute Greifwirkung gewährleistet werden. Somit ist die Klammer flexibler für verschiedene Behälterformate einsetzbar. Durch die oben beschriebene Ausbildung der übrigen Bereiche des inneren Schenkels kann zugleich sichergestellt werden, dass die Klammer stabil ist. Diese Bereiche haben keine unmittelbare Wechselwirkung mit dem Behälter und unterliegen daher in dieser Hinsicht weniger Einschränkungen hinsichtlich ihrer Höhe.

Ein bevorzugter zylinderförmiger Bereich der Außenform des Behälters, an dem die Greifflächen des Greifers wirken, ist der Bereich unterhalb eines Tragrings bis zur Flaschenschulter. Die Flaschenschulter beginnt unterhalb der Flaschenmündung, wenn sich der Innendurchmesser des Behälters wesentlich vergrößert oder verringert.

Die Dimensionen der Greifflächen können gemäß der zu greifenden Behälter gewählt werden. Weiterhin können sie derart ausgebildet sein, dass sie Verstärkung der Greifbacken bilden.

Andere Teile der Klammer, insbesondere andere Teile der Greifbacke, können eine andere Höhe aufweisen, insbesondere auch eine geringere Höhe.

Die Greiffläche kann gegenüber dem daran angrenzenden Teil des inneren Schenkels zumindest teilweise erhaben sein, insbesondere an ihren Rändern. Insbesondere kann die Greiffläche gegenüber dem daran angrenzenden Teil des inneren Schenkels um maximal 1 bis 4 mm, insbesondere 2 bis 3 mm erhaben sein.

Wie oben beschriebene erhabene und/oder gekrümmte Greifflächen können derart ausgebildet und angeordnet sein, dass sie die Verformung der Greifbacken begrenzen. Mit anderen Worten können die Greifflächen Anschläge bilden. Dies ermöglicht, das Intervall, in dem die Verformung erfolgt, zu limitieren. Die Verformung der Greifbacken kann dazu führen, dass die Mittelpunkte der gegriffenen Behälter je nach Verformungsgrad der Greifbacken an verschiedenen Positionen angeordnet sind. Ein begrenzen der Verformung ermöglicht also eine erhöhte Positioniergenauigkeit der Behälter. Das ist insbesondere bei Übergabepunkten, bei denen Behälter an die Klammern übergeben oder von den Klammern übernommen werden, vorteilhaft.

Die beiden Greifbacken können jeweils ein freies Ende aufweisen und ein Ende, an dem sie miteinander verbunden sind.

Die Verbindungsstelle, an der der äußere und innere Schenkel direkt miteinander verbunden sind, kann das freie Ende der Greifbacke darstellen oder näher am freien Ende der Greifbacke angeordnet sein, als die nicht direkt miteinander verbundenen Enden der beiden Schenkel. Insbesondere kann bei der oben beschriebenen V-förmigen Verbindung des inneren und äußeren Schenkels das frei Ende an der Spitze der V-Form angeordnet sein.

Die Greifbacken können miteinander verbunden sein, indem die inneren Schenkel der beiden Greifbacken direkt oder über ein erstes Verbindungsstück, auch als inneres Verbindungsstück bezeichnet, miteinander verbunden sind.

Das erste Verbindungsstück kann dabei insbesondere lediglich indirekt, beispielsweise über den jeweiligen inneren Schenkel und/oder die Streben, mit dem jeweiligen äußeren Schenkel verbunden sein. Zusätzlich kann eine Stützstrebe das erste Verbindungsstück mit den äußeren Schenkeln verbinden.

Alternativ oder zusätzlich können die Greifbacken miteinander verbunden sein, indem die äußeren Schenkel der beiden Greifbacken über ein zweites Verbindungsstück, auch als äußeres Verbindungsstück bezeichnet, miteinander verbunden sind.

Das zweite Verbindungsstück kann dabei insbesondere lediglich indirekt, beispielsweise über den jeweiligen äußeren Schenkel und/oder die Streben, mit dem jeweiligen inneren Schenkel verbunden sein. Zusätzlich kann eine Stützstrebe, beispielsweise die oben beschriebene Stützstrebe, das zweite Verbindungsstück mit den inneren Schenkeln und/oder dem ersten/inneren Verbindungsstück verbinden.

Alternativ oder zusätzlich zu dem ersten Verbindungsstück können Hebel vorgesehen sein, insbesondere je ein Hebel pro Greifbacke. Der jeweilige Hebel kann direkt mit dem jeweiligen inneren Schenkel verbunden sein, Alternativ oder zusätzlich kann der jeweilige Hebel mit einer Stützstrebe, die den inneren Schenkel der jeweiligen Greifbacke und/oder das erste Verbindungsstück mit dem äußeren Schenkel der Greifbacke und/oder mit dem zweiten Verbindungsstück verbindet, verbunden sein. In den Fällen, in denen solche Hebel vorgesehen sind, können die Greifbacken insbesondere ausschließlich über das zweite bzw. äußere Verbindungsstück miteinander verbunden sein.

Die Erfindung betrifft auch eine Behältertransportvorrichtung umfassend einen oder mehrere der oben beschriebenen Behältergreifer. Die Behältertransportvorrichtung kann mindestens ein Betätigungselement umfassen, das derart ausgebildet ist, dass es bei Betätigung die externe Kraft auf die Klammer ausübt.

Das Betätigungselement kann insbesondere an der Stelle, an der die beiden inneren Schenkel miteinander direkt verbunden sind, oder an dem inneren Verbindungsstück die externe Kraft anlegen. Wenn die Klammer die oben beschriebenen Hebel umfasst, kann das Betätigungselement an den beiden Hebeln die externe Kraft anlegen, insbesondere die Hebel spreizen. Das Betätigungselement kann dann beispielsweise einen Nocken einer Nockensteuerung umfassen. Ein Nocken der Nockensteuerung wechselwirkt dann mit den Hebeln der Klammer, um diese zu betätigen. Die Betätigung mittels Nocken ermöglicht einen Verzicht auf eine aktive Steuerung und eine hohe Flexibilität der Behältertransportvorrichtung, da eine solche Nockensteuerung für verschiedenste Arten und Formen von Klammern einsetzbar ist.

Die Behältertransportvorrichtung kann derart ausgebildet sein, dass das Betätigungselement zum Anlegen der externen Kraft aktiv betätigt wird, beispielsweise mittels eines Motors, wobei insbesondere die aktive Betätigung mittels einer Steuereinrichtung gesteuert wird. Alternativ kann die Behältertransportvorrichtung derart ausgebildet sein, dass das Betätigungselement passiv betätigt wird. Das Anlegen der externen Kraft kann dann insbesondere ohne Antrieb und ohne Steuereinrichtung erfolgen.

Die Behältertransportvorrichtung kann beispielsweise einen Transportstern umfassen, der derart ausgebildet ist, dass die Klammern um seine Drehachse umlaufen und dabei auf einem Teil der durchlaufenen Kreisbahn Behälter halten. Die Behältertransportvorrichtung kann alternativ oder zusätzlich auch lineare Transporteinrichtungen umfassen, wobei die Klammern dort zumindest teilweise auf einer linearen Transportbahn bewegt werden.

Die Erfindung betrifft auch ein Verfahren zum Greifen und hängenden Transport von Behältern, insbesondere unter Verwendung mindestens eines Behältergreifers, insbesondere einer Behältertransportvorrichtung umfassend den mindestens einen Behältergreifer. Insbesondere kann das Verfahren unter Verwendung eines der oben beschriebenen Behältergreifer bzw. einer der oben beschriebenen Behältertransportvorrichtungen durchgeführt werden. Das Verfahren umfasst ein Anlegen einer externen Kraft an eine einstückig ausgebildete Klammer mit Greifbacken derart, dass die Greifbacken so verformt werden, dass sie eine Greifwirkung entfalten, wobei die Klammer zum, insbesondere seitlichen, Greifen und Halten des Behälters ausgebildet ist.

Das Verfahren kann insbesondere umfassen, zu einem ersten Übergabezeitpunkt, zu dem Behälter an den Behältergreifer übergeben werden, die externe Kraft anzuwenden, so dass die Klammern den an sie übergebenen Behälter greifen.

Die im Zusammenhang mit der Vorrichtung beschriebenen Merkmale und Vorteile sind analog auch für das Verfahren anwendbar.

Weitere Merkmale und Vorteile werden nachfolgend anhand der beispielhaften Figuren erläutert. Dabei zeigen:
- Figur 1: eine schematische, nicht-maßstabsgetreue Darstellung einer Behältertransportvorrichtung,
- Figuren 2A und 2B: schematische, nicht maßstabsgetreue Darstellungen eines Behältergreifers gemäß einer ersten Ausführungsform,
- Figuren 3A und 3B: schematische, nicht maßstabsgetreue Darstellungen eines Behältergreifers gemäß einer zweiten Ausführungsform,
- Figur 4: eine schematische, nicht-maßstabsgetreue Darstellung eines Behältergreifers gemäß einer dritten Ausführungsform.

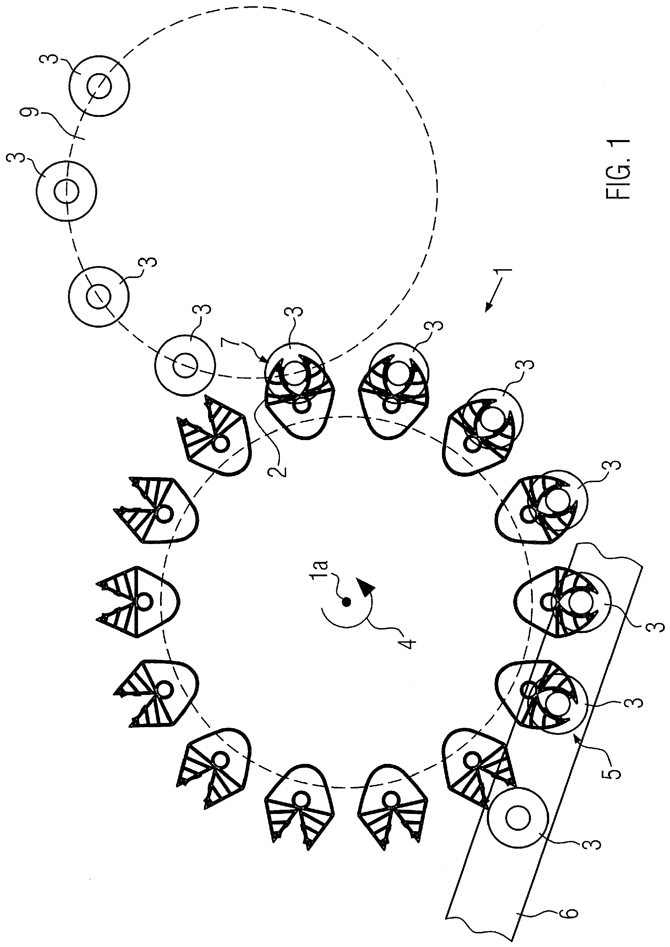

In Figur 1 ist ein Beispiel einer Behältertransportvorrichtung 1 gezeigt, hier beispielhaft als Transportstern ausgebildet, der beispielsweise im Einlauf oder Auslauf einer Behälterbehandlungsmaschine angeordnet sein kann. Die Behältertransportvorrichtung weist mehrere Behältergreifer 2 auf, die jeweils eine Klammer umfassen und hier beispielsweise umfänglich um eine Drehachse 1a des Transportsterns angeordnet sind. Beispielhaft sind hier auch Behälter 3 dargestellt, bei denen es sich beispielsweise um Flaschen handeln kann. Die Behälter werden von den Klammern, hier umfänglich, gegriffen und gehalten. Der Transportstern dreht sich um die Drehachse, beispielsweise in die durch den Pfeil 4 angedeutete Richtung. Ein Behälter kann beispielsweise an einem Übergabepunkt 5 von einer anderen Vorrichtung 6 übernommen werden, indem eine der Klammern diesen greift. Dann kann der Behälter, gehalten durch die Klammer, zu einem weiteren Übergabepunkt 7 transportiert und dort an eine andere Vorrichtung 9 übergeben werden.

Es versteht sich jedoch, dass die Behältertransportvorrichtung auch anderweitig ausgebildet sein kann, insbesondere nicht als Transportstern ausgebildet sein muss.

Im Folgenden werden zwei Ausführungsformen von Behältergreifern beschrieben, die insbesondere Teil der oben beschriebenen oder einer beliebigen anderen Behältertransportvorrichtung sein können. Die Ausführungsformen unterscheiden sich im Wesentlichen durch den Greifmechanismus und die Form der Klammern.

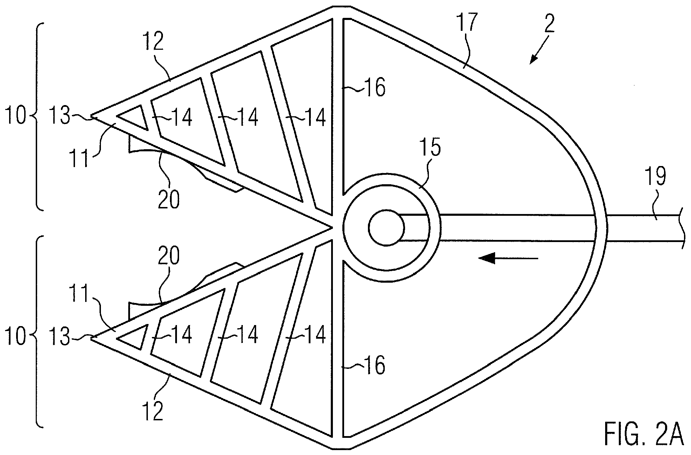

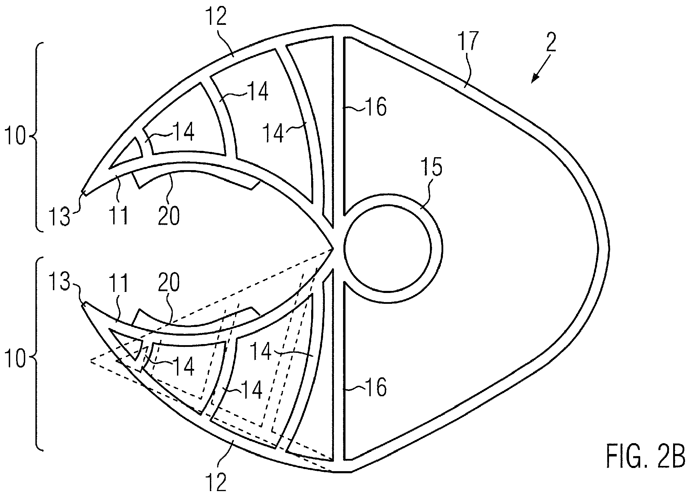

In der in den Figuren 2A und 2B ist jeweils eine Draufsicht auf den Behältergreifer gezeigt. Dabei zeigt Figur 2A die Klammer im Ruhezustand, also wenn die Verformungskraft nicht auf sie wirkt. Figur 2B zeigt die Klammer im Greifzustand, also wenn die Verformungskraft auf sie wirkt. In diesem Zustand entfaltet die Klammer eine Greifwirkung.

Die Klammer 2 ist einteilig ausgebildet und weist zwei Greifbacken 10 mit inneren Schenkeln 11 und äußeren Schenkeln 12 auf. Die beiden Greifbacken sind hier beispielhaft spiegelsymmetrisch ausgebildet, was aber optional ist. Eine solche Symmetrie kann unter Umständen die Vorhersage der Kraftverteilung innerhalb der Klammer erleichtern.

Der jeweilige innere und äußere Schenkel sind direkt miteinander verbunden und bilden am Verbindungspunkt ein freies Ende 13 der jeweiligen Greifbacke. Zudem sind der jeweilige innere und äußere Schenkel über zwischen dem inneren und dem äußeren Schenkel und mit den Schenkeln in einer Ebene angeordnete Streben 14 miteinander verbunden. Im vorliegenden Beispiel weist jede der Greifbacken drei Streben auf. Eine andere Anzahl ist jedoch ebenfalls denkbar.

Der jeweilige innere und äußere Schenkel sind in diesem Beispiel an einem Ende direkt miteinander verbunden. Sie sind also V-förmig angeordnet. Beispielsweise können die Schenkel einen Winkel von etwa 50 Grad einschließen. Andere Winkel, insbesondere in den oben genannten Winkelbereichen, sind ebenfalls denkbar. Die Streben der Verstrebung schließen mit dem inneren Schenkel jeweils einen spitzen Winkel ein. Im vorliegenden Beispiel sind die Streben der Verstrebung beispielsweise jeweils in einem Winkel von etwa 15 Grad bezüglich des jeweiligen inneren Schenkels angeordnet und in einem Winkel von etwa 90 Grad bezüglich des jeweiligen äußeren Schenkels angeordnet. Es versteht sich, dass auch andere Winkel möglich sind, insbesondere innerhalb der oben angegebenen Intervalle.

Die beiden Greifbacken können miteinander verbunden sein, indem die inneren Schenkel der beiden Greifbacken direkt oder, wie hier gezeigt, über ein erstes Verbindungsstück 15, auch als inneres Verbindungsstück bezeichnet, miteinander verbunden sind. Das innere Verbindungsstück ist hier ringförmig ausgebildet. Das innere Verbindungsstück ist, wie der Figur entnommen werden kann, nur indirekt mit den äußeren Schenkeln verbunden, nämlich über die inneren Schenkel, die Streben und zwei Stützstreben 16, die mit den Enden der äußeren Schenkel verbunden sind.

Die äußeren Schenkel der Greifbacken sind über ein äußeres Verbindungsstück 17, das hier bogenförmig ausgebildet ist, miteinander verbunden. Das äußere Verbindungsstück ist weiterhin auch mit den beiden Stützstreben und somit, über die Stützstreben, mit dem inneren Verbindungsstück verbunden. Es weist jedoch keine direkte Verbindung zu den inneren Schenkeln der Greifbacken auf.

In der Figur ist auch ein Betätigungselement gezeigt, hier in Form eines Zugelements 19, angedeutet, welches nicht Teil des Behältergreifers ist, sondern beispielsweise Teil einer diesen umfassenden Behältertransportvorrichtung sein kann. Das Zugelement kann beim Betätigen des Behältergreifers insbesondere an der Stelle, an der die beiden inneren Schenkel miteinander direkt verbunden sind, oder an dem inneren Verbindungsstück die externe Kraft anlegen. Das Zugelement kann hakenförmig ausgebildet sein und, beispielsweise wie hier gezeigt, in das ringförmige innere Verbindungsstück greifen und damit wechselwirken, um die Klammer zu betätigen. Zur Betätigung kann es beispielsweise entlang der durch den Pfeil angedeuteten Richtung bewegt werden. Die Vorrichtung kann derart ausgebildet sein, dass das je ein Zugelement mit einer der Klammern mitgeführt wird.

Das Material, insbesondere seine Elastizität, und die Abmessungen der Klammer können beispielsweise derart gewählt sein, dass durch Anlegen einer Zugkraft an das innere Verbindungsstück von den Greifbacken weg die Greifbacken zum Greifen der Behälter verformt werden und sich bei Wegfall der Zugkraft in eine geöffnete Position zurück verformen, so dass die Behälter losgelassen werden. Dazu kann das besagte Zugelement verwendet werden.

Die Klammern können beispielsweise durch Spritzguss oder durch 3D-Druckverfahren, beispielsweise FLM oder FDM, hergestellt sein. Die Klammern können beispielsweise aus Nylon hergestellt sein. Andere Materialien und Herstellungsarten sind jedoch ebenfalls denkbar.

Die inneren Schenkel der Greifbacken weisen in diesem Beispiel jeweils eine Greiffläche 20 auf. Die Greiffläche ist die Fläche der Greifbacken, die im bestimmungsgemäßen Gebrauch zumindest teilweise an den Behältern angreift. Die Greifflächen der Klammern können, wie hier angedeutet, gegenüber dem übrigen Teil des inneren Schenkels erhaben sein. Die Greifflächen können mit dem Radius gekrümmt sein, der dem maximal zu greifenden Behälterradius entspricht. Es ist ebenfalls denkbar, dass keine gesonderte Greiffläche vorgesehen ist.

Die oben beschriebenen Klammern ermöglichen beispielsweise, dass Behälter mit Durchmessern gegriffen werden, die sich um etwa 10 mm voneinander unterscheiden, beispielsweise zwischen 25 und 26 mm oder 28 und 38 mm.

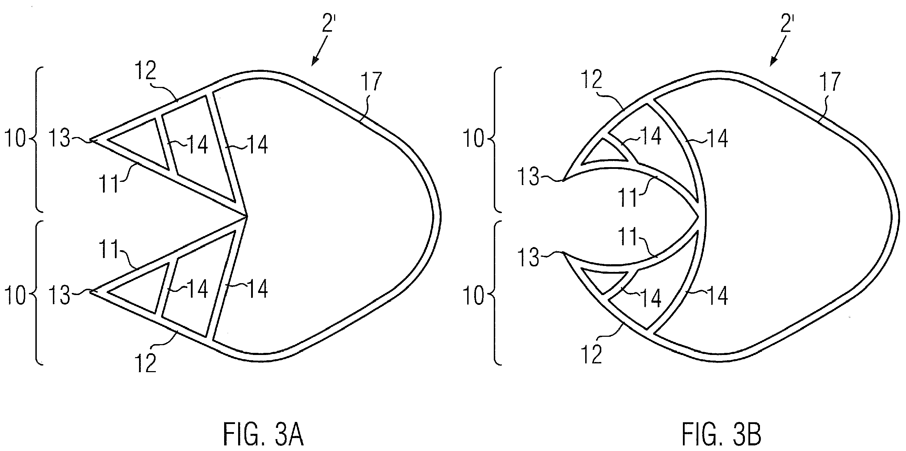

Figuren 3A und 3B zeigen den Behältergreifer 2' gemäß einer zweiten Ausführungsform. Der Behältergreifer ist ähnlich wie der in Figuren 2A und 2B ausgebildet, weist jedoch beispielhaft nur zwei Streben auf und umfasst keine Stützstrebe und kein inneres Verbindungsstück. Hier ist zudem eine Ausführung ohne Greiffläche gezeigt, wobei es ebenso denkbar ist, eine Greiffläche vorzusehen.

Eine solche Anordnung, insbesondere ohne das ringförmige innere Verbindungsstück, kann beispielsweise verwendet werden, wenn das Material, insbesondere seine Elastizität, und die Abmessungen der Klammer derart gewählt sind, dass sich durch das Hineindrücken der Behälter in die Klammern und die Eigenspannung des Materials die Greifwirkung entfaltet. Dann ist es nicht erforderlich, einen Angriffspunkt für ein Zugelement vorzusehen, wie beispielsweise das ringförmige innere Verbindungsstück der ersten Ausführungsform.

Eine erfindungsgemäße Transportvorrichtung kann beispielsweise wie die im Zusammenhang mit Figur 1 beschriebene Transportvorrichtung ausgebildet sein und mindestens einen erfindungsgemäßen Behältergreifer, insbesondere einen wie im Kontext von Figuren 2A und 2B oder 3A und 3B beschriebenen Behältergreifer umfassen. Insbesondere wenn die Transportvorrichtung einen Behältergreifer wie in Figuren 2A und 2B gezeigt umfasst, kann sie ein Betätigungselement, beispielsweise das in Figuren 2A und 2B angedeutete Betätigungselement 19, umfassen. Das Betätigungselement ist derart ausgebildet, dass es bei Betätigung die externe Kraft auf die Klammer ausübt. Das Betätigungselement kann beispielsweise, wie in Figuren 2A und 2B angedeutet, an dem inneren Verbindungsstück die externe Kraft anlegen. Die Behältertransportvorrichtung kann derart ausgebildet sein, dass das Betätigungselement zum Anlegen der externen Kraft betätigt wird. Es kann unter Verwendung einer Steuereinrichtung zum Anlegen der externen Kraft steuerbar oder als passives Betätigungselement ausgebildet sein, bei dem das Anlegen der externen Kraft ohne entsprechende Steuerung erfolgt.

Durch die oben beschriebene Anordnung kann durch Krafteinwirkung auf den Ring eine derartige Verformung der beiden Greifbacken ausgelöst werden, dass sie sich um den Behälter schließen und diesen greifen. Insbesondere werden die durch die zusammenlaufenden Schenkel der Greifbacken gebildeten freien Enden der Greifbacken zueinander hingebogen.

Diese Ausgestaltung ist insbesondere in Verbindung mit einer aktiven Steuerung der Klammern vorteilhaft. Die Steuerung kann dann Antriebselemente ansteuern, die jeweils das Betätigungselement antreiben, beispielsweise über die Zugelemente die Zugkraft anlegen.

Die Ausgestaltung ist jedoch ebenfalls für passive Greifsysteme denkbar, sofern ein im Transportweg der Klammern angeordnetes Aktivierungselement über Betätigungselement, beispielsweise in Form des Zugelements, eine entsprechende Kraft auf die Klammer, insbesondere den Ring ausübt. Denkbar ist beispielsweise, dass die Zugelemente in einer parallel zur Klammerführung verlaufenden Kurvenführung mit der Klammer mitlaufen und diese Kurvenführung in dem Bereich, in dem die Klammern greifen sollen, einen größeren Abstand von Klammerführung aufweist, als in anderen Bereichen, insbesondere im Vergleich zu diesen Bereichen nach innen versetzt ist, so dass die Zugelemente zwar weiter mit den Klammern mitlaufen, aber gleichzeitig eine Zugkraft auf den jeweiligen Ring ausüben. Der versetzte Abschnitt der Kurvenführung fungiert dann als Aktivierungselement.

Alternativ können, wie oben bereits erwähnt, das Material, insbesondere seine Elastizität, und die Abmessungen der Klammer derart gewählt sein, dass sich durch das Hineindrücken der Behälter in die Klammern und die Eigenspannung des Materials die Greifwirkung entfaltet. Diese Ausgestaltung ist insbesondere bei passiven Greifsystemen vorteilhaft, bei denen keine Steuerung und Antriebselemente vorgesehen sind.

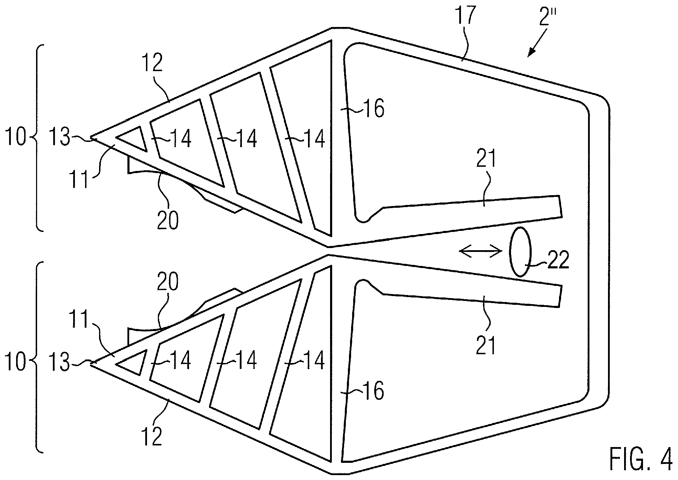

Figur 4 zeigt eine Klammer 2" gemäß einer dritten Ausführungsform, die ähnlich zu den Klammern der ersten und zweiten Ausführungsform ausgebildet ist. Allerdings sind hier die Greifbacken ausschließlich über das äußere (zweite) Verbindungsstück miteinander verbunden. Die Klammer umfasst kein inneres (erstes Verbindungsstück) und die inneren Schenkel sind auch nicht direkt miteinander verbunden. Der innere Schenkel und der äußere Schenkel der Greifbacken sind jeweils über die Stützstrebe direkt miteinander verbunden. Jede der Stützstreben ist mit einem Hebel 21 verbunden. In diesem Beispiel sind die Hebel jeweils mit dem Ende der Stützstrebe verbunden, das mit dem inneren Schenkel der jeweiligen Greifbacke direkt verbunden ist. Es ist auch möglich, dass die Klammer keine Stützstreben umfasst. In diesem Fall können die Hebel direkt mit dem jeweiligen inneren Schenkel der Greifbacken verbunden sein.

Es ist auch möglich, dass anders ausgebildeten Klammern, beispielsweise solche wie in der ersten oder zweiten Ausführungsform beschrieben sind, Hebel aufweisen, die beispielsweise wie in Figur 4 ausgebildet sein können.

Zur Betätigung einer Klammer mit Hebeln, beispielsweise einer Klammer der dritten Ausführungsform, kann ein Nocken 22 vorgesehen sein, der die Hebel betätigt. Mit dem Doppelpfeil ist in der Figur gekennzeichnet, in welche Richtung der Nocken, beispielsweise, wenn er eine durch eine Kurvenführung vorgegebene Bahn durchläuft, bezogen auf die Klammer bewegt wird.

Es versteht sich, dass allgemein die in den zuvor beschriebenen Ausführungsbeispielen genannten Merkmale nicht auf diese speziellen Kombinationen beschränkt sind und auch in beliebigen anderen Kombinationen möglich sind.

## Patentansprüche

1. Behältergreifer (2) zum Greifen und hängenden Transport von Behältern (3), umfassend mindestens eine Klammer, die zum Greifen und Halten des Behälters ausgebildet ist,
wobei die Klammer einstückig ausgebildet ist und Greifbacken (10) umfasst, die derart ausgebildet sind, dass sie durch Anlegen einer externen Kraft derart verformbar sind, dass sie eine Greifwirkung entfalten.

2. Behältergreifer (2) nach Anspruch 1, wobei die Greifbacken (10) derart ausgebildet sind, dass die externe Kraft, die auf die Klammer wirkt, insbesondere aufgrund der Form und der Materialelastizität der Klammer, insbesondere der Greifbacken (10), innerhalb der Klammer derart verteilt wird, dass die Greifbacken (10) zum Greifen eines Behälters verformt werden.

3. Behältergreifer (2) nach Anspruch 2, wobei jede der Greifbacken (10) eine Rippenstruktur aufweist, die zum Verteilen der externen Kraft innerhalb der Greifbacken (10) ausgebildet ist derart, dass sie zum Greifen eines Behälters verformt werden.

4. Behältergreifer (2) nach einem der vorangegangenen Ansprüche, wobei jede der Greifbacken (10) einen inneren Schenkel (11), der der jeweils anderen Greifbacke (10) zugewandt ist, und einen äußeren Schenkel (12) aufweist, wobei die beiden Schenkel (11, 12) an einer Stelle direkt miteinander verbunden sind und zusätzlich über zwischen den beiden Schenkeln (11, 12) angeordnete Streben (14) miteinander verbunden sind.

5. Behältergreifer (2) nach Anspruch 4, wobei die beiden Schenkel (11, 12) und die Streben (14) in einer Ebene angeordnet sind.

6. Behältergreifer (2) nach Anspruch 4 oder 5, wobei die beiden Schenkel (11, 12) einen spitzen Winkel einschließen.

7. Behältergreifer (2) nach einem der vorangegangenen Ansprüche, wobei eine oder beide Greifbacken (10), insbesondere der jeweilige innere Schenkel (11), eine Greiffläche (20) aufweisen.

8. Behältergreifer (2) nach Anspruch 7, wobei die Greiffläche (20) eine Krümmung aufweist, die insbesondere zum Greifen von verschiedenen Behälterdurchmessern geeignet ist.

9. Behältergreifer (2) nach Anspruch 7 oder 8, wobei die Greiffläche (20) gegenüber dem daran angrenzenden Teil des inneren Schenkels (11) mindestens teilweise erhaben ist.

10. Behältergreifer (2) nach einem der vorangegangenen Ansprüche, wobei die beiden Greifbacken (10) jeweils ein freies Ende aufweisen und ein Ende, an dem sie miteinander verbunden sind.

11. Behältergreifer (2) nach Anspruch 10, wobei die Verbindungsstelle, an der der äußere und innere Schenkel (11) direkt miteinander verbunden sind, das freie Ende der jeweiligen Greifbacke (10) darstellt oder näher am freien Ende der Greifbacke (10) angeordnet ist, als die nicht direkt miteinander verbundenen Enden der beiden Schenkel (11, 12).

12. Behältergreifer (2) nach einem der Ansprüche 4 bis 11, wobei die Greifbacken (10) miteinander verbunden sind, indem die inneren Schenkel (11) der beiden Greifbacken (10) direkt oder über ein erstes Verbindungsstück (15) miteinander verbunden sind.

13. Behältergreifer (2) nach Anspruch 12, wobei das erste Verbindungsstück (15) lediglich indirekt, beispielsweise über den jeweiligen inneren Schenkel (11) und/oder die Streben (14), mit dem jeweiligen äußeren Schenkel (12) verbunden ist.

14. Behältergreifer (2) nach einem der Ansprüche 2 bis 13, wobei die Greifbacken (10) miteinander verbunden sind, indem die äußeren Schenkel (12) der beiden Greifbacken (10) über ein zweites Verbindungsstück (17) miteinander verbunden sind.

15. Behältergreifer (2) nach Anspruch 14, wobei das zweite Verbindungsstück (17) lediglich indirekt, beispielsweise über den jeweiligen äußeren Schenkel (12) und/oder die Streben (14), mit dem jeweiligen inneren Schenkel (11) verbunden ist.

16. Behältertransportvorrichtung (1) umfassend mindestens einen Behältergreifer (2) gemäß einem der vorangegangenen Ansprüche.

17. Verfahren zum hängenden Transport von Behältern (3) mittels mindestens eines Behältergreifers (2) nach einem der Ansprüche 1 bis 15 oder einer Behältertransportvorrichtung (1) nach Anspruch 16, umfassend Anlegen einer externen Kraft an eine einstückig ausgebildete Klammer mit Greifbacken (10) derart, dass die Greifbacken (10) so verformt werden, dass sie eine Greifwirkung entfalten, wobei die Klammer zum, insbesondere seitlichen, Greifen und Halten des Behälters ausgebildet ist.
